# EUROPÄISCHE PATENTSCHRIFT

(11) **EP 3 477 157 B1**
(45) Veröffentlichungstag und Bekanntmachung des Hinweises auf die Patenterteilung: **30.12.2020**
(21) Anmeldenummer: 18199477.3
(22) Anmeldetag: 10.10.2018
(51) Int. Cl.: F16H 48/30, F16H 48/24

(54) **DIFFERENTIALSPERRE**
DIFFERENTIAL LOCK
BLOCAGE DU DIFFÉRENTIEL

(30) Priorität: 25.10.2017 DE 102017124969
(43) Veröffentlichungstag der Anmeldung: 01.05.2019
(73) Patentinhaber: MAN Truck & Bus SE, 80995 München (DE)
(72) Erfinder: Drescher, Benjamin, 86932 Pürgen (DE)
(74) Vertreter: v. Bezold & Partner Patentanwälte - PartG mbB

(56) Entgegenhaltungen:
- DE-A1- 10 306 994
- DE-A1-102004 020 863

## Beschreibung

Die Erfindung betrifft ein Differential mit Differentialsperre für ein Kraftfahrzeug.

Aus dem Stand der Technik sind Differentialsperren von Kraftfahrzeugen bekannt, deren Sperrenbetätigung durch eine Druckluftbeaufschlagung betätigbar sind. Die hierdurch erzeugte Schaltkraft wird von einer der Sperrenbetätigung zugehörigen Schaltgabel auf eine Schaltmuffe übertragen. Die Schaltmuffe wirkt auf die Sperrelemente der Differentialsperre ein. Die Schaltgabel ist auf einer innerhalb der Sperrenbetätigung angeordneten Schaltstange in bestimmter axialer Position angeordnet. Dadurch ist zugleich die axiale Position der mit der Schaltgabel in Verbindung stehenden Schaltmuffe sowohl im eingerückten als auch im ausgerückten Zustand definiert. Die axiale Positionierung der Schaltgabel auf der Schaltstange ist üblicherweise durch Verwendung von auf der Schaltstange anzuordnender Einstellscheiben unterschiedlicher Dicke realisiert. Diese Positionierung kann aufwendig sein.

Aus der DE 103 06 994 A1 ist eine Differentialsperre mit einer Sperrenbetätigung bekannt. Mittels einer Drehbetätigung einer axial und radial verschiebbar gelagerten Schaltstange ist eine auf dieser angeordnete Schaltgabel zwecks bedarfsweiser Einstellung der Sperrenbetätigung stufenlos in beliebige Axialpositionen auf der Schaltstange bringbar.

Die DE 10 2004 020 863 A1 offenbart eine Differentialsperre mit einer Klauenkupplung. Auf einer Schaltnabe ist eine Schaltmuffe mittels einer Schaltgabel in axialer Richtung verschiebbar. Ein Primärteil der Klauenkupplung wird von einer Druckfeder in geöffneter Stellung gehalten. Eine Anzahl Kugeln als Abstütz- und Verriegelungselemente ist zwischen konischen Schrägflächen der Schaltmuffe und des Primärteils vorgesehen.

Der Erfindung liegt die Aufgabe zu Grunde, ein Differential mit Differentialsperre mit einer alternativen oder verbesserten Möglichkeit zum Einstellen einer Betätigung der Sperre, insbesondere eines Spiels zwischen der Differentialsperre und dem Differential, zu schaffen.

Die Aufgabe wird gelöst durch eine Differentialsperre gemäß dem unabhängigen Anspruch. Vorteilhafte Weiterbildungen sind in den abhängigen Ansprüchen und der Beschreibung angegeben.

Die Differentialsperre ist für ein Differential eines Kraftfahrzeug, insbesondere eines Nutzfahrzeugs, geeignet. Die Differentialsperre weist einen Schaltkörper, insbesondere eine Schaltgabel, einen Schaltstiel oder einen Stellhebel, auf. Der Schaltkörper ist zum Eingreifen (Einrücken) und zum Lösen (Ausrücken) der Differentialsperre (bspw. axial) bewegbar. Die Differentialsperre weist eine Schaltmuffe (Schiebmuffe) auf, die mit dem Schaltkörper verbunden und gemeinsam mit dem Schaltkörper (bspw. axial) bewegbar ist. Die Differentialsperre weist ein Verbindungsbauteil auf, das den Schaltkörper und die Schaltmuffe zum gemeinsamen Bewegen miteinander verbindet, wobei das Verbindungsbauteil, insbesondere zur Spieleinstellung zwischen der Schaltmuffe und dem Differential (z. B. Sperrelementen des Differentials), axial verstellbar mit der Schaltmuffe verbunden ist.

Die Erfindung kann eine Reihe von Vorteilen bieten. Der Verstellmechanismus ist bei der Montage sehr gut zugänglich, da dieser im Bereich der Schaltmuffe liegt. Der Verstellmechanismus braucht nicht länger im Bereich der Schaltstange angeordnet zu sein, sodass dort ein vereinfachter Aufbau erreicht und benötigter Bauraum verringert wird. Der Bauraum im Bereich der Schaltstange kann ferner weiter verringert werden, da der Einstellweg hier nicht mehr vorgehalten werden muss. Der Einstellweg wird in den Bereich der Antriebswelle (z. B. Hinterachswelle) des Differentials verlegt, wo ausreichend Bauraum in axialer Richtung zur Verfügung stehen kann. Die Sensierung einer Schaltposition der Differentialsperre kann genauer erfolgen, da der Einstellweg/Verstellweg keinen Einfluss auf den Schaltpunkt hat. Bspw. erfolgt die Sensierung im Bereich der Schaltgabel, deren Verstellung nicht länger notwendig ist, wie bspw. im Stand der Technik mit Einlegescheiben. Das Spiel zwischen der Schaltmuffe und dem Differential kann mit komplett montierter Sperrenbetätigung und unter Druckbeaufschlagung eingestellt werden. Die Sperrenbetätigung muss während und nach der Einstellung nicht wieder zerlegt werden. Es sind keine Spezialwerkzeuge erforderlich. Der Aufbau ist einfach und somit schnell in der Praxis umsetzbar.

Insbesondere kann sich der Ausdruck "axial" auf eine Richtung beziehen, die parallel zu einer Mittelachse oder Längsachse der Schaltmuffe ist.

Insbesondere kann über eine axiale Verstellung des Verbindungsbauteils an der Schaltmuffe eine relative Positionierung zwischen der Schaltmuffe einerseits und dem Verbindungsbauteil und dem Schaltkörper andererseits eingestellt werden.

In einem Ausführungsbeispiel ist eine Axialposition des Verbindungsbauteils auf der Schaltmuffe axial verstellbar. Das Verbindungsbauteil ist in der verstellten Axialposition auf der Schaltmuffe axial sicherbar. Damit kann nach erfolgter Einstellung der Axialposition der Schaltmuffe, das Verbindungsbauteil axial gesichert werden. Somit kann die erfolgte Einstellung im Betrieb verwendet werden.

In einem weiteren Ausführungsbeispiel ist das Verbindungsbauteil stufenlos axial verstellbar mit der Schaltmuffe verbunden. Aufgrund der stufenlosen Verstellbarkeit kann ein Spiel zwischen der Schaltmuffe und dem Differential besonders genau eingestellt werden.

In einer Ausführungsform ist über eine axiale Verstellung des Verbindungsbauteils bezüglich der Schaltmuffe eine Axialposition der Schaltmuffe bezüglich des Differentials einstellbar.

In einer weiteren Ausführungsform ist das Verbindungsbauteil ringförmig ausgebildet und/oder der Schaltkörper und das Verbindungsbauteil greifen ineinander ein und/oder der Schaltkörper greift in eine Ringnut des Verbindungsbauteil ein. Damit kann eine sichere Verbindung zwischen dem Schaltkörper und dem Verbindungsbauteil gewährleistet werden.

In einer Ausführungsvariante ist das Verbindungsbauteil axial verstellbar auf die Schaltmuffe aufschraubbar. Alternativ oder zusätzlich weist das Verbindungsbauteil ein Innengewinde zum Aufschrauben auf ein Außengewinde der Schaltmuffe zum axial verstellbaren Verbinden des Verbindungsbauteils und der Schaltmuffe auf. Eine Gewindeverbindung bietet eine leichte und stufenlose Einstellbarkeit.

In einer weiteren Ausführungsvariante ist das Verbindungsbauteil axial-selbstsichernd. Alternativ oder zusätzlich ist das Verbindungsbauteil durch eine form-, kraft- und/oder stoffschlüssige Verbindung (z.B. eine Kontermutter, ein selbstsicherndes Gewinde, einen Gewindekleber, einen Kunststoffring und/oder durch Einschlagen) auf der Schaltmuffe axial gesichert oder axial sicherbar. Damit kann das Verbindungsbauteil auf einfache Weise nach der Einstellung an der Schaltmuffe axial gesichert werden.

In einem Ausführungsbeispiel weist das Verbindungsbauteil ein erstes, insbesondere ringförmiges, Verbindungselement und ein zweites, insbesondere ringförmiges, Verbindungselement auf. Dies bietet die Möglichkeit, die Montage insbesondere des Schaltkörpers zu vereinfachen und/oder eine einfache axiale Selbstsicherung des Verbindungsbauteils vorzusehen.

In einer Weiterbildung sind das erste Verbindungselement und das zweite Verbindungselement dazu ausgebildet, sich gegenseitig axial auf der Schaltmuffe zu sichern.

In einem weiteren Ausführungsbeispiel weisen das erste Verbindungselement und das zweite Verbindungselement jeweils ein Innengewinde zum Aufschrauben auf ein Außengewinde der Schaltmuffe auf. Das erste Verbindungselement und das zweite Verbindungselement sind zum axialen Sichern des Verbindungsbauteils auf der Schaltmuffe gegeneinander verschraubbar. Insbesondere können die Verbindungselemente ein gemeinsames Innengewinde des Verbindungsbauteils und/oder eine gemeinsame Ringnut des Verbindungsbauteils bilden.

In einer Weiterbildung sind das erste Verbindungselement und das zweite Verbindungselement dazu ausgebildet, zum axialen Sichern des Verbindungsbauteils an der Schaltmuffe ineinander einzugreifen. Beispielsweise kann das erste Verbindungselement eine Aufnahme und das zweite Verbindungselement einen Vorsprung aufweisen, die ineinander eingreifen können.

In einer Ausführungsform sichert der Schaltkörper die Schaltmuffe über das Verbindungsbauteil entlang einer Längsrichtung des Schaltkörpers. Alternativ oder zusätzlich ist das Verbindungsbauteil zwischen einem ersten Gabelarm des Schaltkörpers und einem zweiten Gabelarm des Schaltkörpers gehalten. Dadurch kann die Schaltmuffe bis zur Montage der Antriebswelle des Differentials, die sich durch die Schaltmuffe erstreckt, von dem Schaltkörper gehalten werden. Bei einer Demontage der Antriebswelle fällt die Schaltmuffe nicht zu Boden.

In einer bevorzugten Ausführungsform weist der Schaltkörper einen ersten Gabelarm und einen zweiten Gabelarm auf, die das Verbindungsbauteil an einer Ringnut des Verbindungsbauteils umgreifen. Der erste Gabelarm umgreift die Ringnut in einem Winkel größer als 90°. Alternativ oder zusätzlich umgreift der zweite Gabelarm die Ringnut in einem Winkel größer als 90°. Alternativ oder zusätzlich umgreifen der erste Gabelarm und der zweite Gabelarm die Ringnut (gemeinsam) in einem Winkel größer als 180°. Dadurch wird ermöglicht, dass der Schaltkörper die Schaltmuffe über das Verbindungsbauteil halten kann.

In einer Ausführungsvariante weist ein erster Gabelarm des Schaltkörpers eine gerundete Innenkonturfläche auf und/oder ein zweiter Gabelarm des Schaltkörpers weist eine gerundete Innenkonturfläche auf. Die gerundete Innenkonturfläche des ersten Gabelarms und/oder die gerundete Innenkonturfläche des zweiten Gabelarms sind an eine Bodenumfangsfläche einer Ringnut, insbesondere an einer Rundung der Bodenumfangsfläche der Ringnut, des Verbindungsbauteils angepasst.

Insbesondere können die Innenkonturflächen einander zugewandt sein und/oder das Verbindungsbauteil und damit die Schaltmuffe über die Innenkonturfläche des Schaltkörpers gehalten sein.

In einer weiteren Ausführungsvariante ist die Schaltmuffe axial verschiebbar auf einer Antriebswelle des Differentials gelagert, weist die Schaltmuffe mehrere Eingriffselemente zum Eingreifen mit mehreren Sperrelementen des Differentials auf und/oder weist die Differentialsperre eine axial verschiebbare Schaltstange auf, an der der Schaltkörper axial gesichert ist.

Insbesondere kann die Differentialsperre pneumatisch, hydraulisch und/oder elektromagnetisch betätigt sein, der Schaltkörper axial verschiebbar sein und/oder die Schaltmuffe axial verschiebbar sein.

Vorzugsweise kann die Schaltmuffe axial zwischen einer Sperrposition (eingerückten Position), in der die Schaltmuffe in ein Differential (z. B. in Sperrelemente des Differentials) eingreift, und einer Löseposition (ausgerückten Position), in der die Schaltmuffe nicht in das Differential (z. B. in Sperrelemente des Differentials) eingreift, verschiebbar sein.

Die Erfindung betrifft ferner ein Kraftfahrzeug, insbesondere ein Nutzfahrzeug. Das Kraftfahrzeug weist ein Differential, insbesondere ein Querdifferential oder ein Längsdifferential, und eine Differentialsperre wie hierin offenbart auf. Die Differentialsperre ist zum Sperren des Differentials mit dem Differential verbunden.

Es ist auch möglich, die Differentialsperre wie hierin offenbart bei einem Differential in einer anderen Vorrichtung zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Längsschnittansicht durch eine Differentialsperre in einer ausgerückten Stellung;
- Figur 2: eine Längsschnittansicht durch die Differentialsperre in einer eingerückten Stellung; und
- Figur 3: eine Querschnittansicht durch die Differentialsperre.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

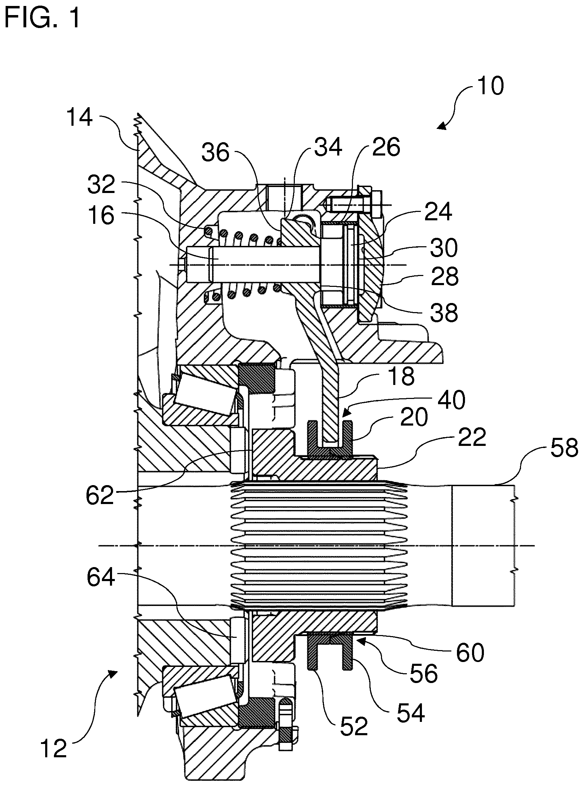

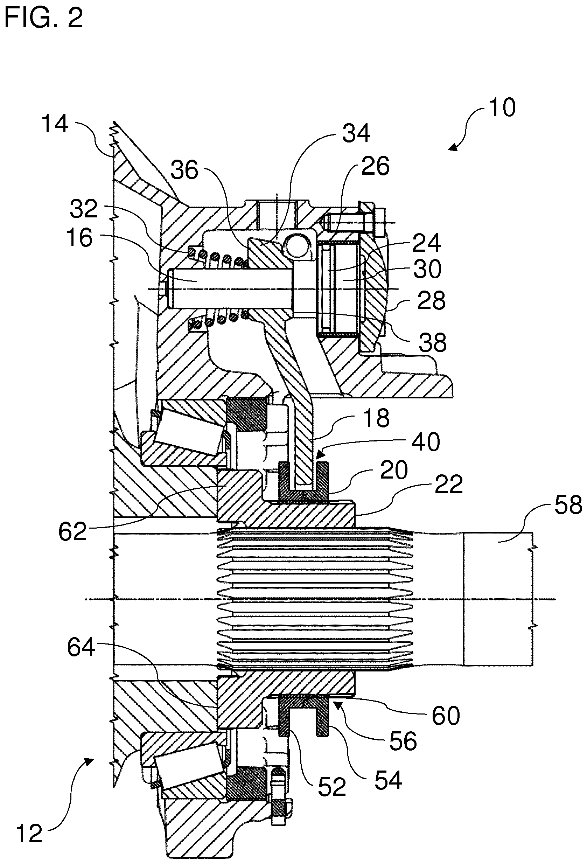

Die Figuren 1 und 2 zeigen eine Differentialsperre 10. Die Differentialsperre 10 kann ein Differential 12 eines Kraftfahrzeugs, insbesondere eines Nutzfahrzeugs, sperren. Das Nutzfahrzeug kann beispielsweise ein Lastkraftwagen oder ein Omnibus sein. Das Differential 12 kann beispielsweise ein Querdifferential oder ein Längsdifferential sein.

In Figur 1 ist die Differentialsperre 10 in einer ausgerückten Stellung dargestellt. In der ausgerückten Stellung sperrt die Differentialsperre 10 das Differential 12 nicht.

In Figur 2 ist die Differentialsperre 10 in einer eingerückten Stellung dargestellt. In der eingerückten Stellung sperrt die Differentialsperre 10 das Differential 12.

Die Differentialsperre 10 weist ein Gehäuse 14, eine Schaltstange 16, einen Schaltkörper 18, ein Verbindungsbauteil 20 und eine Schaltmuffe 22 auf.

Das Differential 12 ist bspw. mittels eines Kegelrollenlagers drehbar im Gehäuse 14 gelagert. Die Schaltstange 16 ist axial verschiebbar in dem Gehäuse 14 zwischen zwei festen Anschlägen gelagert. Die Schaltstange 16 ist mit einem Kolben 24 verbunden. Die Schaltstange 16 und der Kolben 24 können beispielsweise aus einem Stück (einstückig) oder mehrteilig hergestellt sein. Der Kolben 24 ist in einer Führungsbuchse 26 axial verschiebbar gelagert. Die Führungsbuchse 26 ist in dem Gehäuse 14 aufgenommen. Die Führungsbuchse 26 ist gehäuseinnenseitig durch den Kolben 24 verschlossen. Die Führungsbuchse 26 ist gehäuseaußenseitig durch einen Gehäusedeckel 28 verschlossen. Damit ist innerhalb der Führungsbuchse 26 ein Steuerfluidraum 30 eingeschlossen, der mittels geeigneter Dichtungen nach außen und innen abgedichtet ist. Die Anschläge für die Schaltstange 16 können beispielsweise im oder am Gehäuse 14, im oder am Gehäusedeckel 28 und/oder in oder an der Führungsbuchse 26 vorgesehen sein.

Der Steuerfluidraum 30 ist mit einem Steuerfluid, z. B. Druckluft oder Hydraulikflüssigkeit, beaufschlagbar. Bei Beaufschlagung der Steuerfluidraums 30 mit einem Steuerfluid wird der Kolben 24 und die damit verbundene Schaltstange 16 axial in einer Richtung weg von dem Gehäusedeckel 28 verschoben. Wird der Steuerfluidraum 30 druckentlastet, so wird der Kolben 24 und die damit verbundene Schaltstange 16 unter der Wirkung einer Schraubenfeder 32 axial in einer entgegengesetzten Richtung verschoben. Die Schraubenfeder 32 dient als Rückstellfeder, um die Differentialsperre 10 in den ausgerückten Zustand zurückzustellen, wenn der Steuerfluidraum 30 entlastet wird. Es ist allerdings auch möglich, dass zur Verschiebung der Schaltstange 16 ein anderer Betätigungsmechanismus vorgesehen ist.

Der Schaltkörper 18 ist in der dargestellten Ausführungsform als eine Schaltgabel ausgebildet. Es ist allerdings auch möglich, dass der Schaltkörper 18 beispielsweise als ein (länglicher) Schalthebel (Stellhebel) oder Schaltstiel ausgebildet ist.

Der Schaltkörper 18 weist an einem ersten Ende einen ringförmigen Bereich 34 auf. Der ringförmige Bereich 34 ist axial auf der Schaltstange 16 gesichert. Der ringförmige Bereich 34 weist zwei einander entgegengesetzte Stirnflächen 36 und 38 auf. An der ersten Stirnfläche 36 stützt sich der ringförmige Bereich 34 des Schaltkörpers 18 an der Schraubenfeder 32 ab. Die Schraubenfeder 32 stützt sich wiederum am Gehäuse 14 ab. An der zweiten Stirnfläche 38 stützt sich der ringförmige Bereich 34 des Schaltkörpers 18 an einem Absatz der Schaltstange 16 ab. Es ist auch möglich, dass der Schaltkörper 18 auf eine andere Art und Weise an der Schaltstange 16 axial befestigt ist, z. B. durch ein Gewinde mit Sicherung. Durch die axiale Sicherung des Schaltkörpers 18 an der Schaltstange 16 bewegt sich der Schaltkörper 18 gemeinsam mit der Schaltstange 16.

Der Schaltkörper 18 erstreckt sich aus dem Gehäuse 14 in ein nicht im Detail dargestelltes Gehäuse des Differentials 12. Der Schaltkörper 18 ist über das Verbindungsbauteil 20 mit der Schaltmuffe 22 verbunden.

Der Schaltkörper 18 ist an einem dem ersten Ende gegenüberliegenden Ende mit dem Verbindungsbauteil 20 verbunden. Im Einzelnen greift der Schaltkörper 18 in einer Ringnut 40 des Verbindungsbauteils 20 ein. Bei einer axialen Verschiebung nimmt der Schaltkörper 18 das Verbindungsbauteil 20 und die Schaltmuffe 22 mit.

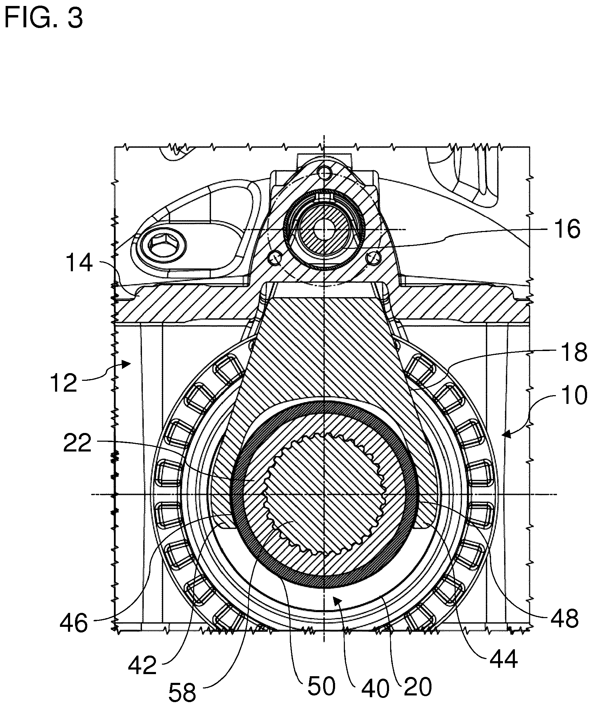

Die Figur 3 zeigt die Verbindung zwischen dem Schaltkörper 18 und dem Verbindungsbauteil 20 im Detail.

Der Schaltkörper 18 weist einen ersten Gabelarm 42 und einen zweiten Gabelarm 44 auf. Die Gabelarme 42, 44 umgreifen die Ringnut 40 des Verbindungsbauteils 20. Insbesondere umgreifen die Gabelarme 42, 44 die Ringnut 40 in einem Winkel größer als 180°. Die Ringnut 40 wird von den Gabelarmen 42, 44 mit Luftspalt umgriffen. Der Schaltkörper 18 hält das Verbindungsbauteil 20 und die Schaltmuffe 22 in einer Richtung entlang seiner Längsachse.

Insbesondere weisen die Gabelarme 42, 44 jeweils gerundete Innenkonturflächen 46, 48 auf. Die Innenkonturfläche 46 des ersten Gabelarms 42 liegt der Innenkonturfläche 48 des zweiten Gabelarms 44 gegenüber. Die Innenkonturflächen 46, 48 sind an einer Bodenumfangsfläche 50 der Ringnut 40 angepasst. Die Innenkonturflächen 46, 48 umschließt die Bodenumfangsfläche 50 mit Luftspalt, um das Verbindungsbauteil 20 und die Schaltmuffe 22 vor dem Herausfallen zu sichern.

Die gerundete Ausführung der Gabelarme 42, 44 wird durch eine geteilte (insbesondere zweiteilige) Ausführung des Verbindungsbauteils 20 ermöglicht, die hierin genauer an anderer Stelle beschrieben ist. Somit können die Gabelarme 42, 44 das Verbindungsbauteil 20 und die Schaltmuffe 22 bis zur Montage der Antriebswelle 58, z. B. einer Hinterachswelle, sichern. Hierbei muss insbesondere nicht auf eine genaue Abstimmung der Toleranzen geachtet werden.

Nachfolgend wird erneut insbesondere auf die Figuren 1 und 2 Bezug genommen.

Das Verbindungsbauteil 20 ist ringförmig ausgebildet. Insbesondere ist das Verbindungsbauteil 20 als ein Führungsgewindering, der von dem Schaltkörper 18 geführt wird und die Schaltmuffe 22 führt, ausgebildet.

Das Verbindungsbauteil 20 weist ein erstes ringförmiges Verbindungselement 52 und ein zweites ringförmiges Verbindungselement 54 auf. Die Verbindungselemente 52, 54 bilden gemeinsam die Ringnut 40 aus. Die beiden Verbindungselemente 52, 54 weisen ein Innengewinde 56 auf.

Die Schaltmuffe (Schiebemuffe) 22 ist axial verschiebbar über eine Welle-Nabe-Verbindung, z. B. eine Verzahnung oder eine Keilwellenverbindung, auf der Antriebswelle 58 des Differentials 12 angeordnet. Die Schaltmuffe 22 weist ein Außengewinde 60 auf, das an das Innengewinde 56 des Verbindungsbauteils 20 angepasst ist. Die Schaltmuffe 22 weist an einer Stirnseite Eingriffselemente 62, z. B. Zähne oder Klauen, auf. Die Eingriffselemente 62 können in entsprechend angepasste Sperrelemente 64, z. B. Zähne oder Klauen, des Differentials 12 zum Sperren des Differentials 12 eingreifen. Zum Sperren des Differentials 12 wird die Schaltmuffe 22 axial in einer Richtung zu den Sperrelementen 64 verschoben (nach links in Figuren 1 und 2). Zum Freigeben des Differentials 12 wird die Schaltmuffe 22 axial in einer entgegengesetzten Richtung verschoben (nach rechts in Figuren 1 und 2). Die Verschiebung der Schaltmuffe 22 wird über eine axiale Verschiebung der Schaltstange 16, des Schaltkörpers 18 und des Verbindungbauteils 20 bewirkt.

Aufgrund von fertigungsbedingten und montagebedingten Toleranzen zwischen der Differentialsperre 10 und dem Differential 12 ist es notwendig, eine Axialposition der Schaltmuffe 22 bezüglich des Differentials 12 einzustellen. So kann gewährleistet werden, dass die Eingriffselemente 62 der Schaltmuffe 22 und die Sperrelemente 64 des Differentials 12 beim Sperren des Differentials 12 wie gewünscht ineinander eingreifen. Ebenso kann gewährleistet werden, dass die Eingriffselemente 62 der Schaltmuffe 22 und die Sperrelemente 64 des Differentials 12 beim Lösen/Freigeben des Differentials 12 vollständig außer Eingriff miteinander sind.

Um eine Axialposition der Schaltmuffe 22 einzustellen, wird das Verbindungsbauteil 20 über das Innengewinde 56 entsprechend auf das Außengewinde 60 der Schaltmuffe 22 aufgeschraubt. Die Schraubverbindung zwischen dem Verbindungsbauteil 20 und der Schaltmuffe 22 ermöglicht, dass das Verbindungsbauteil 20 stufenlos axial verstellbar auf der Schaltmuffe 22 positioniert werden kann. Dadurch kann mit sehr hoher Genauigkeit eine gewünschte Axialposition der Schaltmuffe 22 in der gesperrten Stellung und der gelösten Stellung eingestellt werden. Folglich kann ein fertigungsbedingtes und montagebedingtes Spiel zwischen den Komponenten der Differentialsperre 10 und des Differentials 12 mittels axialer Verstellung des Verbindungsbauteils 20 zur Schaltmuffe 22 eingestellt bzw. ausgeglichen werden.

Sobald die Einstellung der Axialposition der Schaltmuffe 22 über die axiale Verstellung zwischen dem Verbindungsbauteil 20 unter Schaltmuffe 22 eingestellt wurde, wird das Verbindungsbauteil 20 auf der Schaltmuffe 22 axial gesichert.

In der gezeigten Ausführungsform sichert sich das Verbindungsbauteil 20 selbst auf der Schaltmuffe 22. Im Einzelnen werden die Verbindungselemente 52, 54 gegeneinander verschraubt und sichern sich somit gegenseitig. Zum Verstärken der Sicherungswirkung können die Verbindungselemente 52, 54, wie dargestellt ist, zusätzlich ineinander eingreifen. Hierzu kann eines der Verbindungselemente 52, 54 eine beispielsweise ringförmige Aufnahme aufweisen und das andere der Verbindungselemente 52, 54 einen entsprechenden Vorsprung (eine Rampe) aufweisen, die in die Aufnahme eingreifen kann.

Es ist auch möglich, dass das Verbindungsbauteil 20 einteilig ausgebildet ist und/oder anderweitig auf der Schaltmuffe 22 axial sicherbar ist. Beispielsweise kann das Verbindungsbauteil 20 zusätzlich oder alternativ mittels einer form-, kraft- und/oder stoffschlüssigen Verbindung (z.B. mittels einer Kontermutter, mittels eines selbstsichernden Gewindes, mittels eines Gewindeklebers, mittels eines Kunststoffrings und/oder mittels Einschlagen in eine Nut) axial gesichert werden.

### Bezugszeichenliste

- 10: Differentialsperre
- 12: Differential
- 14: Gehäuse
- 16: Schaltstange
- 18: Schaltkörper
- 20: Verbindungsbauteil
- 22: Schaltmuffe
- 24: Kolben
- 26: Führungsbuchse
- 28: Gehäusedeckel
- 30: Steuerfluidraum
- 32: Schraubenfeder
- 34: Ringförmiger Bereich
- 36: Erste Stirnfläche
- 38: Zweite Stirnfläche
- 40: Ringnut
- 42: Erster Gabelarm
- 44: Zweiter Gabelarm
- 46: Innenkonturfläche
- 48: Innenkonturfläche
- 50: Bodenumfangsfläche
- 52: Erstes Verbindungselement
- 54: Zweites Verbindungselement
- 56: Innengewinde
- 58: Antriebswelle
- 60: Außengewinde
- 62: Eingriffselemente
- 64: Sperrelemente

## Patentansprüche

1. Differential (12) für ein Kraftfahrzeug, insbesondere ein Nutzfahrzeug, wobei das Differential (12) eine Differentialsperre (10) aufweist, wobei die Differentialsperre (10) aufweist:
einen Schaltkörper (18), insbesondere eine Schaltgabel, der zum Eingreifen und zum Lösen der Differentialsperre (10) bewegbar ist; und
eine Schaltmuffe (22), die mit dem Schaltkörper (18) verbunden und gemeinsam mit dem Schaltkörper (18) bewegbar ist; und
ein Verbindungsbauteil (20), das den Schaltkörper (18) und die Schaltmuffe (22) zum gemeinsamen Bewegen miteinander verbindet, wobei das Verbindungsbauteil (20), insbesondere zur Spieleinstellung zwischen der Schaltmuffe (22) und dem Differential (12), axial verstellbar mit der Schaltmuffe (22) verbunden ist, **gekennzeichnet dadurch, dass** über eine axiale Verstellung des Verbindungsbauteils (20) an der Schaltmuffe (22) eine relative Positionierung zwischen der Schaltmuffe (22) einerseits und dem Verbindungsbauteil (20) und dem Schaltkörper (18) andererseits eingestellt wird.

2. Differential (12) nach Anspruch 1, wobei:
eine Axialposition des Verbindungsbauteils (20) auf der Schaltmuffe (22) axial verstellbar ist; und
das Verbindungsbauteil (20) in der verstellten Axialposition auf der Schaltmuffe (22) axial sicherbar ist.

3. Differential (12) nach Anspruch 1 oder Anspruch 2, wobei:
das Verbindungsbauteil (20) stufenlos axial verstellbar mit der Schaltmuffe (22) verbunden ist; und/oder
über eine axiale Verstellung des Verbindungsbauteils (20) bezüglich der Schaltmuffe (22) eine Axialposition der Schaltmuffe (22) bezüglich des Differentials (12) einstellbar ist.

4. Differential (12) nach einem der vorherigen Ansprüche, wobei:
das Verbindungsbauteil (20) ringförmig ausgebildet ist; und/oder
der Schaltkörper (18) und das Verbindungsbauteil (20) ineinander eingreifen; und/oder
der Schaltkörper (18) in eine Ringnut (40) des Verbindungsbauteil (20) eingreift.

5. Differential (12) nach einem der vorherigen Ansprüche, wobei:
das Verbindungsbauteil (20) axial verstellbar auf die Schaltmuffe (22) aufschraubbar ist; und/oder
das Verbindungsbauteil (20) ein Innengewinde (56) zum Aufschrauben auf ein Außengewinde (60) der Schaltmuffe (22) zum axial verstellbaren Verbinden des Verbindungsbauteils (20) und der Schaltmuffe (22) aufweist.

6. Differential (12) nach einem der vorherigen Ansprüche, wobei:
das Verbindungsbauteil (20) axial-selbstsichernd ist, und/oder
das Verbindungsbauteil (20) durch eine form-, kraft- und/oder stoffschlüssige Verbindung, insbesondere eine Kontermutter, ein selbstsicherndes Gewinde, einen Gewindekleber, einen Kunststoffring und/oder durch Einschlagen, auf der Schaltmuffe (22) axial gesichert oder axial sicherbar ist.

7. Differential (12) nach einem der vorherigen Ansprüche, wobei:
das Verbindungsbauteil (20) ein erstes, insbesondere ringförmiges, Verbindungselement (52) und ein zweites, insbesondere ringförmiges, Verbindungselement (54) aufweist.

8. Differential (12) nach Anspruch 7, wobei:
das erste Verbindungselement (52) und das zweite Verbindungselement (54) dazu ausgebildet sind, sich gegenseitig axial auf der Schaltmuffe (22) zu sichern.

9. Differential (12) nach Anspruch 7 oder Anspruch 8, wobei:
das erste Verbindungselement (52) und das zweite Verbindungselement (54) jeweils ein Innengewinde (56) zum Aufschrauben auf ein Außengewinde (60) der Schaltmuffe (22) aufweisen, und
das erste Verbindungselement (52) und das zweite Verbindungselement (54) zum axialen Sichern des Verbindungsbauteils (20) auf der Schaltmuffe (22) gegeneinander verschraubbar sind.

10. Differential (12) nach einem der Ansprüche 7 bis 9, wobei:
das erste Verbindungselement (52) und das zweite Verbindungselement (54) dazu ausgebildet sind, zum axialen Sichern des Verbindungsbauteils (20) an der Schaltmuffe (22) ineinander einzugreifen.

11. Differential (12) nach einem der vorherigen Ansprüche, wobei:
der Schaltkörper (18) die Schaltmuffe (22) über das Verbindungsbauteil (20) entlang einer Längsrichtung des Schaltkörpers (18) sichert; und/oder
das Verbindungsbauteil (20) zwischen einem ersten Gabelarm (42) des Schaltkörpers (18) und einem zweiten Gabelarm (44) des Schaltkörpers (18) gehalten ist.

12. Differential (12) nach einem der vorherigen Ansprüche, wobei der Schaltkörper (18) einen ersten Gabelarm (42) und einen zweiten Gabelarm (44), die das Verbindungsbauteil (20) an einer Ringnut (40) des Verbindungsbauteils (20) umgreifen, aufweist,
wobei:
der erste Gabelarm (42) die Ringnut (40) in einem Winkel größer als 90° umgreift; und/oder
der zweite Gabelarm (44) die Ringnut (40) in einem Winkel größer als 90° umgreift; und/oder
der erste Gabelarm (42) und der zweite Gabelarm (44) die Ringnut (40) in einem Winkel größer als 180° umgreifen.

13. Differential (12) nach einem der Ansprüche 1 bis 3 oder 5 bis 12, wobei:
ein erster Gabelarm (42) des Schaltkörpers (18) eine gerundete Innenkonturfläche (46) aufweist und/oder ein zweiter Gabelarm (44) des Schaltkörpers (18) eine gerundete Innenkonturfläche (48) aufweist; und
die gerundete Innenkonturfläche (46) des ersten Gabelarms (42) und/oder die gerundete Innenkonturfläche (48) des zweiten Gabelarms (42) an eine Bodenumfangsfläche (50) einer Ringnut (40) des Verbindungsbauteils (20) angepasst ist.

14. Differential (12) nach einem der vorherigen Ansprüche, wobei:
die Schaltmuffe (22) axial verschiebbar auf einer Antriebswelle (58) des Differentials (12) gelagert ist; und/oder
die Schaltmuffe (22) mehrere Eingriffselemente (62) zum Eingreifen mit mehreren Sperrelementen (64) des Differentials (12) aufweist; und/oder
die Differentialsperre (12) eine axial verschiebbare Schaltstange (16) aufweist, an der der Schaltkörper (18) axial gesichert ist.

15. Kraftfahrzeug, insbesondere Nutzfahrzeug, mit: einem Differential (12), insbesondere einem Querdifferential oder einem Längsdifferential, nach einem der vorherigen Ansprüche.

## Claims

1. A differential (12) for a motor vehicle, in particular a utility vehicle, wherein the differential (12) has a differential lock (10), wherein the differential lock (10) has:
a shift body (18), in particular a shift fork, which is movable in order to engage and in order to release the differential lock (10); and
a shift sleeve (22), which is connected to the shift body (18) and is movable together with the shift body (18); and
a connecting component (20), which connects the shift body (18) and the shift sleeve (22) to one another for joint movement, wherein the connecting component (20) is connected to the shift sleeve (22) in an axially adjustable manner, in particular in order to set the play between the shift sleeve (22) and the differential,
**characterized in that** a relative positioning between the shift sleeve (22), on the one hand, and the connecting component (20) and the shift body (18),
on the other hand, is set via an axial adjustment of the connecting component (20) on the shift sleeve (22) .

2. The differential (12) according to Claim 1, wherein:
an axial position of the connecting component (20) on the shift sleeve (22) is adjustable axially; and the connecting component (20) can be secured axially in the adjusted axial position on the shift sleeve (22) .

3. The differential (12) according to Claim 1 or Claim 2, wherein:
the connecting component (20) is connected to the shift sleeve (22) so as to be axially adjustable in an infinitely variable manner; and/or
an axial position of the shift sleeve (22) with respect to the differential (12) can be set via an axial adjustment of the connecting component (20) with respect to the shift sleeve (22).

4. The differential (12) according to one of the preceding claims, wherein:
the connecting component (20) is of annular configuration; and/or
the shift body (18) and the connecting component (20) engage in one another; and/or
the shift body (18) engages in an annular groove (40) of the connecting component (20).

5. The differential (12) according to one of the preceding claims, wherein:
the connecting component (20) can be screwed onto the shift sleeve (22) in an axially adjustable manner; and/or
the connecting component (20) has an internal thread (56) for screwing onto an external thread (60) of the shift sleeve (22) for the axially adjustable connection of the connecting component (20) and the shift sleeve (22).

6. The differential (12) according to one of the preceding claims, wherein:
the connecting component (20) is axially self-securing, and/or
the connecting component (20) is secured axially or can be secured axially on the shift sleeve (22) by means of a positive locking, non-positive and/or
integrally bonded connection, in particular by means of a lock nut, a self-securing thread, a threadlocker, a plastics ring and/or by being hammered in.

7. The differential (12) according to one of the preceding claims, wherein:
the connecting component (20) has a first, in particular annular, connecting element (52) and a second, in particular annular, connecting element (54) .

8. The differential (12) according to Claim 7, wherein:
the first connecting element (52) and the second connecting element (54) are configured to be mutually secured axially on the shift sleeve (22).

9. The differential (12) according to Claim 7 or Claim 8, wherein:
the first connecting element (52) and the second connecting element (54) in each case have an internal thread (56) for screwing onto an external thread (60) of the shift sleeve (22), and
the first connecting element (52) and the second connecting element (54) can be screwed counter to one another in order to axially secure the connecting component (20) on the shift sleeve (22).

10. The differential (12) according to one of Claims 7 to 9, wherein:
the first connecting element (52) and the second connecting element (54) are configured to engage in one another for axially securing the connecting component (20) on the shift sleeve (22).

11. The differential (12) according to one of the preceding claims, wherein:
the shift body (18) secures the shift sleeve (22) along a longitudinal direction of the shift body (18) via the connecting component (20); and/or
the connecting component (20) is held between a first fork arm (42) of the shift body (18) and a second fork arm (44) of the shift body (18).

12. The differential (12) according to one of the preceding claims, wherein the shift body (18) has a first fork arm (42) and a second fork arm (44) which engage around the connecting component (20) at an annular groove (40) of the connecting component (20),
wherein:
the first fork arm (42) engages around the annular groove (40) at an angle greater than 90°; and/or
the second fork arm (44) engages around the annular groove (40) at an angle greater than 90°; and/or
the first fork arm (42) and the second fork arm (44) engage around the annular groove (40) at an angle greater than 180°.

13. The differential (12) according to one of Claims 1 to 3 or 5 to 12, wherein:
a first fork arm (42) of the shift body (18) has a rounded inner contour face (46) and/or a second fork arm (44) of the shift body (18) has a rounded inner contour face (48); and
the rounded inner contour face (46) of the first fork arm (42) and/or the rounded inner contour face (48) of the second fork arm (42) is adapted to a bottom circumferential face (50) of an annular groove (40) of the connecting component (20).

14. The differential (12) according to one of the preceding claims, wherein:
the shift sleeve (22) is mounted in an axially displaceable manner on a drive shaft (58) of the differential (12); and/or
the shift sleeve (22) has a plurality of engagement elements (62) for engaging with a plurality of locking elements (64) of the differential (12); and/or
the differential lock (12) has an axially displaceable shift rod (16), on which the shift body (18) is secured axially.

15. A motor vehicle, in particular utility vehicle, having:
a differential (12), in particular a transverse differential or a longitudinal differential, according to one of the preceding claims.

## Revendications

1. Différentiel (12) pour un véhicule automobile, en particulier un véhicule utilitaire, le différentiel (12) présentant un blocage de différentiel (10), le blocage de différentiel (10) présentant :
un corps de sélection (18), en particulier une fourchette de sélection, qui peut être déplacé pour enclencher et désenclencher le blocage de différentiel (10) ; et
un manchon de sélection (22) qui est relié au corps de sélection (18) et peut être déplacé conjointement avec le corps de sélection (18) ; et
un composant de liaison (20) qui relie le corps de sélection (18) et le manchon de sélection (22) l'un à l'autre pour les déplacer conjointement, le composant de liaison (20) étant relié de manière axialement réglable au manchon de sélection (22), en particulier pour régler le jeu entre le manchon de sélection (22) et le différentiel (12),
**caractérisé en ce qu'**un réglage axial du composant de liaison (20) sur le manchon de sélection (22) permet de régler un positionnement relatif entre le manchon de sélection (22) d'une part et le composant de liaison (20) et le corps de sélection (18) d'autre part.

2. Différentiel (12) selon la revendication 1, dans lequel :
une position axiale du composant de liaison (20) sur le manchon de sélection (22) est réglable axialement ; et
le composant de liaison (20) peut être bloqué axialement dans la position axiale réglée sur le manchon de sélection (22).

3. Différentiel (12) selon la revendication 1 ou 2, dans lequel :
le composant de liaison (20) est relié de manière axialement réglable en continu au manchon de sélection (22) ; et/ou
un réglage axial du composant de liaison (20) par rapport au manchon de sélection (22) permet de pouvoir régler une position axiale du manchon de sélection (22) par rapport au différentiel (12).

4. Différentiel (12) selon l'une quelconque des revendications précédentes, dans lequel :
le composant de liaison (20) est réalisé en forme d'anneau ; et/ou
le corps de sélection (18) et le composant de liaison (20) s'engrènent l'un dans l'autre ; et/ou
le corps de sélection (18) vient prise dans une gorge annulaire (40) du composant de liaison (20).

5. Différentiel (12) selon l'une quelconque des revendications précédentes, dans lequel :
le composant de liaison (20) peut être vissé de manière axialement réglable sur le manchon de sélection (22) ; et/ou
le composant de liaison (20) présente un taraudage (56) pour un vissage sur un filetage extérieur (60) du manchon de sélection (22) pour la liaison axialement réglable du composant de liaison (20) et du manchon de sélection (22).

6. Différentiel (12) selon l'une quelconque des revendications précédentes, dans lequel :
le composant de liaison (20) est axialement autobloquant, et/ou
le composant de liaison (20) est ou peut être bloqué axialement sur le manchon de sélection (22) par un assemblage par complémentarité de forme, par adhérence et/ou par liaison de matière, en particulier par un contre-écrou, un filetage autobloquant, un frein-filet, une bague de plastique et/ou par enfoncement.

7. Différentiel (12) selon l'une quelconque des revendications précédentes, dans lequel :
le composant de liaison (20) présente un premier élément de liaison (52), en particulier annulaire, et un deuxième élément de liaison (54), en particulier annulaire.

8. Différentiel (12) selon la revendication 7, dans lequel :
le premier élément de liaison (52) et le deuxième élément de liaison (54) sont réalisés pour se bloquer mutuellement de manière axiale sur le manchon de sélection (22).

9. Différentiel (12) selon la revendication 7 ou 8, dans lequel :
le premier élément de liaison (52) et le deuxième élément de liaison (54) présentent respectivement un taraudage (56) pour un vissage sur un filetage extérieur (60) du manchon de sélection (22), et
le premier élément de liaison (52) et le deuxième élément de liaison (54) peuvent être vissés l'un avec l'autre pour un blocage axial du composant de liaison (20) sur le manchon de sélection (22).

10. Différentiel (12) selon l'une quelconque des revendications 7 à 9, dans lequel :
le premier élément de liaison (52) et le deuxième élément de liaison (54) sont réalisés pour s'engrener l'un dans l'autre pour un blocage axial du composant de liaison (20) sur le manchon de sélection (22).

11. Différentiel (12) selon l'une quelconque des revendications précédentes, dans lequel :
le corps de sélection (18) bloque le manchon de sélection (22) par l'intermédiaire du composant de liaison (20) le long d'une direction longitudinale du corps de sélection (18) ; et/ou
le composant de liaison (20) est maintenu entre un premier bras de fourche (42) du corps de sélection (18) et un deuxième bras de fourche (44) du corps de sélection (18).

12. Différentiel (12) selon l'une quelconque des revendications précédentes, dans lequel le corps de sélection (18) présente un premier bras de fourche (42) et un deuxième bras de fourche (44) qui enveloppent le composant de liaison (20) au niveau d'une gorge annulaire (40) du composant de liaison (20),
dans lequel :
le premier bras de fourche (42) enveloppe la gorge annulaire (40) selon un angle supérieur à 90° ; et/ou
le deuxième bras de fourche (44) enveloppe la gorge annulaire (40) selon un angle supérieur à 90° ; et/ou
le premier bras de fourche (42) et le deuxième bras de fourche (44) enveloppent la gorge annulaire (40) selon un angle supérieur à 180°.

13. Différentiel (12) selon l'une quelconque des revendications 1 à 3 ou 5 à 12, dans lequel :
un premier bras de fourche (42) du corps de sélection (18) présente une surface de contour intérieure arrondie (46) et/ou un deuxième bras de fourche (44) du corps de sélection (18) présente une surface de contour intérieure arrondie (48) ; et
la surface de contour intérieure arrondie (46) du premier bras de fourche (42) et/ou la surface de contour intérieure arrondie (48) du deuxième bras de fourche (42) sont adaptées à une surface circonférentielle de fond (50) d'une gorge annulaire (40) du composant de liaison (20).

14. Différentiel (12) selon l'une quelconque des revendications précédentes, dans lequel :
le manchon de sélection (22) est monté de manière axialement coulissante sur un arbre d'entraînement (58) du différentiel (12) ; et/ou
le manchon de sélection (22) présente plusieurs éléments de mise en prise (62) pour une mise en prise avec plusieurs éléments de blocage (64) du différentiel (12) ; et/ou
le blocage de différentiel (12) présente une tringle de sélection (16) axialement coulissante sur laquelle le corps de sélection (18) est bloqué axialement.

15. Véhicule automobile, en particulier véhicule utilitaire, comprenant :
un différentiel (12), en particulier un différentiel transversal ou un différentiel longitudinal, selon l'une quelconque des revendications précédentes.
